# EUROPÄISCHE PATENTSCHRIFT

(11) **EP 3 564 440 B1**
(45) Veröffentlichungstag und Bekanntmachung des Hinweises auf die Patenterteilung: **23.03.2022**
(21) Anmeldenummer: 18170768.8
(22) Anmeldetag: 04.05.2018
(51) Int. Cl.: E01C 19/48, G05D 1/00, G05D 1/02, H04L 29/08, H04W 4/02, H04W 4/46, G08C 17/02

(54) **EINBAUZUG**
PAVING TRAIN
TRAIN DE FINISSEUSES

(43) Veröffentlichungstag der Anmeldung: 06.11.2019
(73) Patentinhaber: Joseph Vögele AG, 67067 Ludwigshafen (DE)
(72) Erfinder: BUSCHMANN, Martin, 67435 Mussbach (DE); RUTZ, Arnold, 67065 Ludwigshafen (DE); EUL, Achim, 68305 Mannheim (DE); DELIUS, Henning, 67480 Edenkoben (DE)
(74) Vertreter: Grünecker Patent- und Rechtsanwälte PartG mbB

(56) Entgegenhaltungen:
- EP-A1- 0 834 620
- EP-A1- 1 837 442
- EP-A1- 2 514 872
- WO-A1-2017/034830
- WO-A1-2017/100312
- DE-A1-102014 018 533
- US-A1- 2009 142 133

## Beschreibung

Die Erfindung betrifft einen Einbauzug zur Herstellung zumindest einer Belagschicht auf einer Verkehrsfläche gemäß dem Oberbegriff des Patentanspruchs 1.

Ein derartige Einbauzug ist aus der WO2017034830A1 bekannt.

Ein solcher Einbauzug kommt auf immer mehr Straßenbaustellen zum Asphalteinbau oder dergleichen zum Einsatz, wobei neben beispielsweise einem Straßenfertiger auch Beschicker zur berührungslosen Asphaltübergabe zum Straßenfertiger verwendet werden. Durch den Einsatz eines solchen Beschickers und dem hierdurch gebildeten Materialpuffer kann ein unterbrechungsfreier Einbau des Asphalts erreicht werden. D.h., der Straßenfertiger oder auch ein anderer Fertiger kann die Straße kontinuierlich fertigen und der Beschicker folgt dem Fertiger in einem vorgebbaren Abstand zur Materialübergabe. Beispielsweise werden dadurch Stöße durch Andocken von LKWs vermieden.

Daher besteht die Möglichkeit, dass der Beschicker unterschiedliches Mischgut in zwei oder mehr Materialpuffern in Form von Materialkübeln mitführt und an den Fertiger übergibt.

Es besteht ebenfalls die Möglichkeit, dass beispielsweise bei einem Einbau heiß an heiß, zwei Fertiger von einem Beschicker bedient werden. Um einen bestimmten Abstand der Einheiten im Einbauzug aufrechterhalten zu können, ist aus der Praxis bekannt, dass eine entsprechende Abstandsregelung oder ein Auffahrschutz zur Steuerung des entsprechenden Abstandes zwischen Fertiger und Beschicker vorhanden ist.

Weiterhin ist aus der Praxis bekannt, dass ein Bediener insbesondere eines Beschickers abschätzt, wie viel Material noch im Materialpuffer des jeweiligen Fertigers ist bzw. in der Übergabe ist, und sich bei insbesondere zwei Fertiger dann entscheiden muss, welcher Fertiger mit Mischgut beschickt werden muss. Dies gilt ebenso für die entsprechende Abstandsregelung, gemäß welcher sich insbesondere der Beschicker an die Einbaugeschwindigkeit des Fertigers anpasst. D.h., im Wesentlichen muss nur der Beschicker mit einer entsprechenden Abstandsregelung ausgestattet sein, sodass er der Geschwindigkeit des Fertigers folgen kann. Als Notfallmaßnahme kann der Auffahrschutz ausgebildet sein, der verhindern soll, dass der Beschicker zu nah an den Fertiger heranfährt, falls er den entsprechend Abstand nicht einhalten kann.

Der vorliegenden Erfindung liegt die Aufgabe zugrunde, eine entsprechende Kommunikation über bestimmte Parameter, wie Geschwindigkeiten und Materialfüllstand zu ermöglichen und sowohl einen entsprechenden Abstand der Einheiten untereinander als auch die entsprechende Materialübergabe in einfach Weise zu steuern. Diese Aufgabe wird durch die Merkmale des Patentanspruchs 1 gelöst. Die Erfindung zeichnet sich insbesondere dadurch aus, dass zwischen den Einheiten eine drahtlose Kommunikationsverbindung zumindest zum Austausch von Geschwindigkeiten und Materialfüllstand ausgebildet ist.

D.h., dass durch den Einsatz der drahtlosen Kommunikationsverbindung beispielsweise einem Bediener eines Beschickers oder Fertigers angezeigt werden kann, wie viel Material noch im Materialpuffer vorhanden ist. Dadurch ist es für den Bediener einfacher und besser zu entscheiden, wie viel Material zu welchem Fertiger zu übermitteln ist oder wie viel Material an sich noch vorhanden ist. Außerdem besteht bei Messung der Geschwindigkeiten die Möglichkeit, dass beispielsweise der Fertiger die Einbaugeschwindigkeit auf der Baustelle vorgibt und der Beschicker folgt. Allerdings kann ein Fertigerfahrer in der Regel nicht direkt feststellen, ob eine ausreichende Beschickung mit Material durch den Beschicker noch möglich ist. Durch die drahtlose Kommunikationsverbindung kann allerdings die Einbaugeschwindigkeit, beispielsweise initiiert durch den Beschicker, rechtzeitig verlangsamt werden, falls ein entsprechender Materialfüllstand am Beschicker relativ niedrig ist. Auch ein Anfahren nach einem Stopp oder ein Anhalten der Einheiten kann durch die drahtlose Kommunikationsverbindung abgestimmt für die entsprechenden Einheiten erfolgen.

Neben der drahtlosen Kommunikationsverbindung kann als Notfallmaßnahme die jeweilige Einheit einen Auffahrschutz aufweisen. Dieser verhindert beispielsweise bei Ausfall der drahtlosen Kommunikationsverbindung einen zu geringen Abstand zwischen den Einheiten.

Es wurde bereits darauf hingewiesen, dass durch einen Fertiger die entsprechende Einbaugeschwindigkeit vorgebbar ist. Mit entsprechender Geschwindigkeit folgt dann der Beschicker, wobei die entsprechende Einbaugeschwindigkeit an den Beschicker von dem Fertiger über die drahtlose Kommunikationsverbindung übermittelbar ist. Sollte allerdings der Materialfüllstand beim Beschicker unter ein vorgegebenes Niveau absinken, kann beispielsweise insbesondere der Beschicker über die drahtlose Kommunikationsverbindung die Einbaugeschwindigkeit verändern, und insbesondere reduzieren.

Außerdem kann erfindungsgemäß eine Übertragung von weiteren Geschwindigkeiten erfolgen, sodass beispielsweise vom Fertiger eine Soll-Einbaugeschwindigkeit und/oder eine aktuelle Sollgeschwindigkeit an einen Beschicker übermittelbar ist. Durch diese entsprechende Information über die drahtlose Kommunikationsverbindung folgt der Beschicker dem Fertiger entsprechend zur Soll-Einbaugeschwindigkeit oder aktuellen Soll-Geschwindigkeit.

Es besteht ebenfalls die Möglichkeit, dass beispielsweise vom Beschicker zum Fertiger eine aktuelle Geschwindigkeit über die drahtlose Kommunikationsverbindung übertragen wird, damit ggf. der Fertiger seine Einbaugeschwindigkeit an die Geschwindigkeit des Beschickers anpasst. Eine entsprechende Information kann vom Beschicker zum Fertiger ebenfalls über den fließenden Materialstrom und/oder über eine Füllmenge im vorhanden Materialpuffer übermittelbar sein. Auch im Hinblick auf diese beiden Parameter kann eine Anpassung der Geschwindigkeit des Fertigers an den Beschicker erfolgen.

Außerdem sind durch die Übermittlung dieser Daten jeweils die aktuellen Füllmengen des Beschickers am Fertiger bzw. für den Fertigerfahrer bekannt.

Weiterhin von Vorteil kann sein, wenn der Beschicker zumindest zwei Materialpuffer mit unterschiedlichem Mischgut aufweist. Dadurch besteht die Möglichkeit, dass das jeweilige Mischgut aus einem der Materialpuffer an den Fertiger lieferbar ist, wobei auch entsprechender Mischgutwechsel über die drahtlose Kommunikationsverbindung kommunizierbar ist. Dies gilt ebenfalls für die entsprechende Menge im jeweiligen Materialpuffer oder den jeweiligen Materialstrom Um in einfacher Weise und angepasst an die drahtlose Kommunikationsverbindung entsprechend die Füllmenge im Materialpuffer zu überprüfen, kann der Beschicker eine Füllstandsanzeigeeinrichtung aufweisen. Dadurch ist der Beschickerfahrer immer über die aktuellen Füllmengen des jeweiligen Materialpuffers informiert. Die entsprechende Information kann ebenfalls über die drahtlose Kommunikationsverbindung an den Fertiger übertragen werden.

Eine einfache Möglichkeit zur Füllstandsmessung und anschließend zur Füllstandsanzeige kann darin gesehen werden, wenn entsprechende Sensoren angeordnet sind, wie beispielsweise Ultraschallsensor, Kamera, 3D-Sensor oder dergleichen.

Um die Anzeige nicht nur des Füllstands, sondern ggf. auch einer Zeit bis zum Ausbrauch des entsprechenden Materials zu ermöglichen, kann die Füllstandsanzeigeeinrichtung ebenfalls zur Zeitanzeige ausgebildet sein oder eine separate Zeitanzeige kann neben der Füllstandsanzeigeeinrichtung zum Anzeigen der Zeit bis zum Ausbrauch der im Materialpuffer vorhanden Füllmengen vorhanden sein.

An dieser Stelle sei angemerkt, dass auch ein entsprechender Füllstand am Fertiger mittels solcher Sensoren messbar sein kann. Dabei kann auch am Beschicker eine aktuelle Füllmenge vom Fertiger zur Verfügung stehen, sodass die Nachlieferung von Material von Seiten des Beschickers entsprechend anpassbar ist. Selbstverständlich kann eine entsprechende Anzeige der Füllmenge des Fertigers auch dem Fertigerfahrer über entsprechende Füllstandsanzeigeeinrichtungen und/oder Zeitanzeigen gemeldet werden.

Es besteht ebenfalls die Möglichkeit, dass beispielsweise ein Beschicker insbesondere zwei Fertigern zugeordnet ist. D.h., durch den Einsatz der drahtlosen Kommunikationsverbindung kann einem entsprechenden Beschickerfahrer angezeigt werden, welcher Fertiger noch wie viel Material im Materialpuffer zur Verfügung hat und ggf. welchem Fertiger wann neues Material zugeführt werden sollte. Es ist auf diese Weise sichergestellt, dass dem Beschickerfahrer immer die aktuellen Füllmengen der Materialpuffer beider Fertiger zur Verfügung stehen.

Dabei können über die drahtlose Kommunikationsverbindung als Parameter beispielsweise vom jeweiligen Fertiger Füllstand und/oder voraussichtliche Zeit bis zum Ausbrauch der Füllmenge vom entsprechenden Fertiger übermittelbar sein.

Um die entsprechende Zeit bis zum Ausbrauch der Füllmenge berechnen zu können, kann beispielsweise auf Durchflussmengen aus der Vergangenheit rückgegriffen werden, sodass anhand der entsprechenden Füllmengen und der aus der Vergangenheit bekannten Durchflussmengen die voraussichtliche Zeit bis zum Ausbrauch des entsprechenden Materials berechnet werden kann.

Für die drahtlose Kommunikationsverbindung sind verschiedene Standards denkbar, wie beispielsweise WLAN, Bluetooth, Zigbee, Wibree, Wimax, optischer Richtfunk oder dergleichen. Alle diese Standards verfügen über eine ausreichende Reichweite, um eine entsprechende drahtlose Kommunikationsverbindung zwischen den Einheiten eines Einbauzuges herzustellen. Um ggf. Einflüsse der drahtlosen Kommunikationsverbindung von außen zu vermeiden, besteht ebenfalls die Möglichkeit, mittels der drahtlosen Kommunikationsverbindung entsprechende Daten verschlüsselt zu übertragen.

Erfindungsgemäß ergibt sich somit ein Einbauzug, bei dem beispielsweise auch ein Beschicker Einfluss auf die Geschwindigkeit des Einbauzuges nehmen kann, siehe mögliche Materialströme und verbleibender Füllstand von Material am Beschicker. Außerdem sind entsprechende Parameter zwischen Fertigern und Beschickern in einfacher Weise austauschbar, um beispielsweise Füllstände an allen Einheiten mittels einer entsprechenden Füllstandsmessung abzufragen und bei jeder Einheit darzustellen. Weiterhin wird der Abstand zwischen den Einheiten des Einbauzuges in einfacher Weise geregelt, da durch die drahtlose Kommunikationsverbindung durch entsprechende Interaktion aller Einheiten die Einbaugeschwindigkeit durch jede der Einheiten veränderbar ist. Dies gilt ebenfalls für ein Anfahren nach einem Stopp oder ein Anhalten, wobei in diesem Zusammenhang die aktuelle Soll-Geschwindigkeit und eine entsprechende Soll-Einbaugeschwindigkeit jeder der Einheiten zur Verfügung steht oder von dieser abfragbar ist.

Im Folgenden werden vorteilhafte Ausführungsbeispiele der Erfindung anhand der in der Zeichnung beigefügten Figuren näher erläutert.

Es zeigen
- Fig. 1: einen Einbauzug aus zwei Fertigern und einem Beschicker;
- Fig. 2: einen Einbauzug aus Straßenfertiger, IP-Fertiger und Beschicker, und
- Fig. 3: eine Prinzipdarstellung von Anzeigen zum Materialfüllstand bzw. Gebrauchszeit.

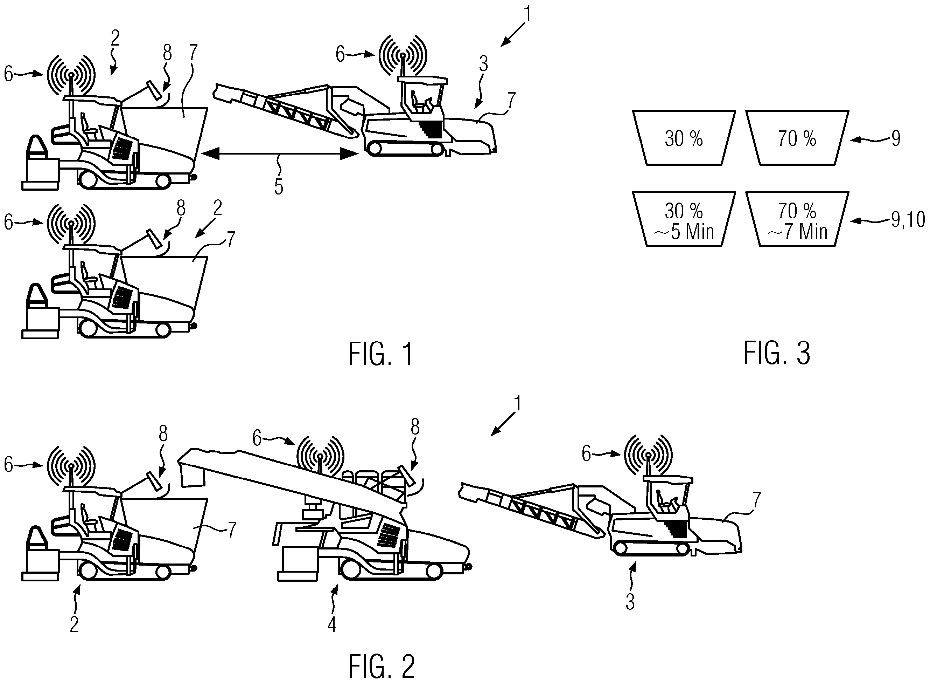

In Figur 1 ist ein Beschicker 3 zum Beschicken von zwei Straßenfertiger 2 dargestellt. Diese Fahrzeuge bilden einen Einbauzug 1 zum Herstellen zumindest einer Belagschicht auf einer Verkehrsfläche. Jede der Einheiten 2, 3 ist selbstständig angetrieben und diese fahren im Verband, um beispielsweise einen unterbrechungsfreien Einbau von Asphalt zu ermöglichen. Die beiden Straßenfertiger 2 weisen jeweils einen entsprechenden Materialpuffer 7 auf, in den von dem Beschicker 3 nachgeliefert werden kann. Entsprechende Füllstände der Materialpuffer 7 sind durch einen Füllstandssensor 8 feststellbar, wobei ein solcher Füllstandssensor beispielsweise ein Ultraschallsensor, eine Kamera, ein 3D-Sensor oder dergleichen ist. Zwischen den Einheiten ist eine drahtlose Kommunikationsverbindung 6 aufgebaut, mittels der sich beispielsweise ein Abstand 5 zwischen Straßenfertiger 2 und Beschicker 3 regeln lässt. Eine solche Abstandsregelung erfolgt beispielsweise über Übermitteln einer Soll-Einbau-Geschwindigkeit oder der aktuellen Soll-Geschwindigkeit vom Fertiger an den Beschicker. D.h., der Beschicker folgt mit entsprechender Geschwindigkeit dem Fertiger, um den entsprechenden Abstand 5 aufrechtzuerhalten. Bei diesem Abstand 5 ist weiterhin ein Beschicken des Fertigers mit Material vom Beschicker 3 möglich.

Weiterhin ist bei dem Ausführungsbeispiel nach Figur 1 über die drahtlose Kommunikationsverbindung am Beschicker 3 feststellbar, welcher der Fertiger 2 noch wie viel Material zur Verfügung hat. D.h., siehe auch Figur 3, dem Beschickerfahrer wird angezeigt, wie viel Material noch im jeweiligen Materialpuffer 7 der entsprechenden Fertiger 2 vorhanden ist. Dadurch wird dem Beschickerfahrer ermöglicht, rechtzeitig und sicher festzustellen, wie viel Material wann zu welchem Fertiger gebracht werden sollte. D.h., der Beschickerfahrer kann von einem Fertiger zum anderen wechseln, sobald er die entsprechende Information über die drahtlose Kommunikationsverbindung erhalten hat. Erfindungsgemäß weiß daher der Beschickerfahrer immer die aktuelle Füllmenge der beiden Fertiger. Außer der entsprechenden Füllmenge kann dem Beschickerfahrer ebenfalls die voraussichtliche Zeit bis zum Ausbrauch der vorhandenen Mengen beim Fertiger angezeigt werden, siehe nochmals Figur 3 mit den Prozentangaben bei den Füllstandsanzeigeeinrichtungen 9 bzw. Prozentangaben und Zeitangaben bei der Füllstandsanzeigeeinrichtung mit Zeitanzeige 9, 10.

Die entsprechenden Zeiten können beispielsweise auf der Grundlage der gemessenen Füllmengen und aus der Vergangenheit bekannter Durchflussmengen am Fertiger berechnet werden.

Sowohl bei Figur 1 als auch bei Figur 2 werden die über die drahtlose Kommunikationsverbindung weitere Parameter, wie beispielsweise die Einbaugeschwindigkeit des Fertigers übertragen, sodass der Beschicker sich entsprechend dem Fertiger anpassen kann. Zusätzlich kann zwischen den Einheiten des Einbauzuges 1 ein Auffahrschutz ausgebildet sein, der beispielsweise bei Ausfall der drahtlosen Kommunikationsverbindung einen zu geringen Abstand zwischen den Einheiten verhindert.

Erfindungsgemäß kann auf diese Weise einerseits der Fertiger die entsprechende Geschwindigkeit für den Einbauzug vorgeben. Allerdings weiß der Fertigerfahrer zum Teil nichts über ggf. vorliegende Engpässe in der Beschickung mit Mischgut vom Beschicker her. Durch die drahtlose Kommunikationsverbindung kann eine Rückmeldung an den Fertigerfahrer erfolgen. Dadurch kann vom Fertigerfahrer her die Einbaugeschwindigkeit verringert werden. Dies kann ebenfalls von Seiten des Beschickers her erfolgen, da dieser ebenfalls entsprechende Anzeigen der Figur 3 für seine Materialpuffer und für seine Zeit zum Materialverbrauch aufweist.

Weiterhin dient die drahtlose Kommunikationsverbindung zur Ermittlung entsprechender Parameter beim Anfahren nach einem Stopp oder beim Anhalten der Einheiten des Einbauzugs. Dies kann beispielsweise durch Übertragung von aktuellen Soll-Geschwindigkeiten zwischen den Einheiten verbessert werden. Analog kann auch eine Meldung der entsprechenden Parameter über die drahtlose Kommunikationsverbindung von Seiten des Beschickers her erfolgen, siehe beispielsweise Materialfüllstand oder Zeit bis zum Ausbrauch des Materials. D.h., aufgrund dieser Parameter kann auch vom Fertiger her eine Anpassung der Einbaugeschwindigkeit gemäß dieser Parameter erfolgen.

In Figur 2 besteht der entsprechende Einbauzug 1 aus drei Einheiten, siehe Straßenfertiger 2, IP-Fertiger 4 und Beschicker 3. Diese können mit entsprechender Abstandsregelung, siehe die Ausführung zu Figur 1, hintereinander fahren, wobei auch ein Wechsel in der Anordnung der Einheiten möglich ist. Auch hier erfolgt eine entsprechende Übermittlung von Parametern zwischen den Einheiten, siehe als Parameter die Einbaugeschwindigkeit, Soll-Einbaugeschwindigkeit, aktuelle Soll-Geschwindigkeit, Materialfüllstände oder Zeit zum Ausbrauch des Materials. Zwischen allen Einheiten besteht die entsprechende drahtlose Kommunikationsverbindung 6.

Weiterhin sei noch darauf verwiesen, dass ebenfalls die Möglichkeit besteht, dass der Beschicker beispielsweise zwei Materialpuffer mit unterschiedlichem Mischgut aufweist, sodass je nach Erfordernis entsprechendes Material an den Fertiger übertragbar ist. Dadurch kann beispielsweise auch nach Figur 1 den verschiedenen Fertigern unterschiedliches Material zuführbar sein.

Dies gilt analog auch für Figur 2.

In Figur 3 sind die entsprechenden Anzeigen für beispielsweise zwei Materialpuffer dargestellt, siehe die Füllstandsanzeigeeinrichtung 9 mit jeweils 30 % bzw. 70 % Material in den Materialpuffern von zwei Fertigern oder in zwei Materialpuffern eines Beschickers. Außerdem ist in Figur 3 zusätzlich ein weiteres Ausführungsbeispiel dargestellt, bei dem die Füllstandsanzeigeeinrichtung 9 außerdem eine Zeitanzeige 10 aufweist. Dieser ist entnehmbar, dass beispielsweise bei dem zu 30 % gefüllten Materialpuffer noch für fünf Minuten eine Zufuhr zum Fertiger oder bei dem zu 70 % gefüllten Materialpuffer eine Zufuhr von sieben Minuten noch möglich ist. Dies kann allerdings analog auch ein Hinweis auf die Zeit sein, die noch zwei unterschiedlichen Fertigern verbleiben, um ihren Materialpuffer zu leeren.

## Patentansprüche

1. Einbauzug (1) zum Herstellen zumindest einer Belagschicht auf einer Verkehrsfläche aus wenigstens zwei selbstständig angetriebenen, im Verband fahrenden Einheiten, wobei die Einheiten Straßenfertiger, Deckenfertiger, IP-Fertiger oder Beschicker umfassen, welche Einheiten sich mit einem vorgebbaren Abstand hintereinander bewegen, **dadurch gekennzeichnet, dass** zwischen den Einheiten (2, 3, 4) eine drahtlose Kommunikationsverbindung (6) zumindest zum Austausch von Geschwindigkeiten und Materialfüllstand eines Fertigers oder Beschickers ausgebildet ist.

2. Einbauzug nach Anspruch 1, **dadurch gekennzeichnet, dass** die Einheit (2, 3, 4) einen Auffahrschutz aufweist.

3. Einbauzug nach Anspruch 1 oder 2, **dadurch gekennzeichnet, dass** durch einen Fertiger (2, 4) eine Einbaugeschwindigkeit vorgebbar und durch insbesondere einen Beschicker (3) über die drahtlose Kommunikationsverbindung (6) veränderbar ist.

4. Einbauzug nach einem der vorangehenden Ansprüche, **dadurch gekennzeichnet, dass** vom Fertiger (2, 4) eine Soll-Einbaugeschwindigkeit und/oder aktuelle Sollgeschwindigkeiten an ein Beschicker (3) übermittelbar sind.

5. Einbauzug nach einem der vorangehenden Ansprüche, **dadurch gekennzeichnet, dass** vom Beschicker (3) zum Fertiger (2, 4) eine aktuelle Geschwindigkeit insbesondere vom Materialstrom und/oder insbesondere eine Füllmenge von einem Materialpuffer übermittelbar ist.

6. Einbauzug nach einem der vorangehenden Ansprüche, **dadurch gekennzeichnet, dass** der Beschicker (3) zumindest zwei Materialpuffer mit unterschiedlichem Mischgut aufweist.

7. Einbauzug nach einem der vorangehenden Ansprüche, **dadurch gekennzeichnet, dass** der Beschicker (3) eine Füllstandsanzeigeeinrichtung (9) aufweist.

8. Einbauzug nach einem der vorangehenden Ansprüche, **dadurch gekennzeichnet, dass** zur Füllstandsmessung Sensoren, wie Ultraschallsensor, Kamera oder 3D-Sensor angeordnet sind.

9. Einbauzug nach einem der vorangehenden Ansprüche, **dadurch gekennzeichnet, dass** der Beschicker (3) eine Zeitanzeigeeinrichtung (10) zur Anzeige der Zeit bis zum Ausbrauch der im Materialpuffer vorhandenen Füllmenge aufweist.

10. Einbauzug nach einem der vorangehenden Ansprüche, **dadurch gekennzeichnet, dass** der Beschicker (3) insbesondere zwei Fertigern (2, 4) zugeordnet ist und einem Bediener des Einbauzugs (1) ein aktueller Materialvorrat jedes Fertigers durch die drahtlose Kommunikationsverbindung (6) übermittelbar ist.

11. Einbauzug nach einem der vorangehenden Ansprüche, **dadurch gekennzeichnet, dass** an den Bediener vom jeweiligen Fertiger (2, 4) zumindest Füllstand und/oder voraussichtliche Zeit bis zum Ausbrauch der Füllmenge des Materialpuffers übermittelbar ist.

12. Einbauzug nach einem der vorangehenden Ansprüche, **dadurch gekennzeichnet, dass** ein Füllstand am Fertiger (2, 4) mittels Sensor, beispielsweise Ultraschallsensor, Kamera oder 3D-Sensor messbar ist.

13. Einbauzug nach einem der vorangehenden Ansprüche, **dadurch gekennzeichnet, dass** die drahtlose Kommunikationsverbindung (6) als WLAN, Bluetooth, ZigBee, Wibree, Wimax oder optischer Richtfunk ausgebildet ist.

14. Einbauzug nach einem der vorangehenden Ansprüche, **dadurch gekennzeichnet, dass** mittels der drahtlosen Kommunikationsverbindung (6) Daten verschlüsselt übertragbar sind.

## Claims

1. Paving train (1) for producing at least one pavement layer on a traffic surface comprising at least two independently driven units which travel in a group, the units comprising a road finisher, a road paver, or an IP finisher, or a feeder, which units move one behind the other at a predeterminable distance, **characterized in that** a wireless communication link (6) is formed between the units (2, 3, 4) at least for exchanging speeds and a material level of a finisher/paver or a feeder.

2. Paving train according to claim 1, **characterized in that** the unit (2, 3, 4) has a collision protection.

3. Paving train according to claim 1 or 2, **characterized in that** a paving speed can be predetermined by a finisher (2, 4) and can be changed by a feeder (3) in particular via the wireless communication link (6).

4. Paving train according to one of the preceding claims, **characterized in that** a desired paving speed and/or current desired paving speeds can be transmitted to a feeder (3) by the finisher (2, 4).

5. Paving train according to one of the preceding claims, **characterized in that** a current speed, in particular of the material flow and/or, in particular, a filling quantity can be transmitted from the feeder (3) to the finisher (2, 4) by a material buffer.

6. Paving train according to one of the preceding claims, **characterized in that** the feeder (3) has at least two material buffers with different mixed material.

7. Paving train according to one of the preceding claims, **characterized in that** the feeder (3) comprises a filling level indicator device (9).

8. Paving train according to one of the preceding claims, **characterized in that** sensors such as ultrasonic sensor, camera, or a 3D sensor, are arranged for level measurement.

9. Paving train according to one of the preceding claims, **characterized in that** the feeder (3) has a time display device (10) for displaying the time until the filling quantity present in the material buffer is used up.

10. Paving train according to one of the preceding claims, **characterized in that** the feeder (3) is assigned in particular to two finishers (2, 4) and an operator of the paving train (1) can transmit a current material stock of each finisher by means of the wireless communication link (6).

11. Paving train according to one of the preceding claims, **characterized in that** at least the filling level and/or the estimated time until the filling quantity of the material buffer is used up can be transmitted to the operator by the respective finisher (2, 4).

12. Paving train according to one of the preceding claims, **characterized in that** a filling level on the finisher (2, 4) can be measured by means of a sensor, for example an ultrasonic sensor, a camera, or a 3D sensor.

13. Paving train according to one of the preceding claims, **characterized in that** the wireless communication link (6) is designed as a WLAN, Bluetooth, ZigBee, Wibree, Wimax, or optical directional radio.

14. Paving train according to one of the preceding claims, **characterized in that** data can be transmitted in encrypted form by means of the wireless communication link (6).

## Revendications

1. Train d'ouvrage (1) permettant de produire au moins une couche de revêtement sur une surface de circulation à partir d'au moins deux unités entraînées de manière indépendante et circulant en combinaison, dans lequel les unités comprennent des finisseurs routiers, des finisseurs de revêtement, des finisseurs en ligne ou des véhicules distributeurs, lesquelles unités se déplacent les unes derrière les autres à une distance pouvant être prédéterminée, **caractérisé en ce qu'**une liaison de communication sans fil (6) est formée entre les unités (2, 3, 4) au moins pour échanger des vitesses et un niveau de remplissage de matériau d'un finisseur ou d'un véhicule distributeur.

2. Train d'ouvrage selon la revendication 1, **caractérisé en ce que** l'unité (2, 3, 4) présente une protection contre les collisions.

3. Train d'ouvrage selon la revendication 1 ou 2, **caractérisé en ce qu'**une vitesse d'ouvrage peut être prédéfinie par un finisseur (2, 4) et peut être modifiée en particulier par un véhicule distributeur (3) par l'intermédiaire de la liaison de communication sans fil (6).

4. Train d'ouvrage selon l'une quelconque des revendications précédentes, **caractérisé en ce qu'**une vitesse d'ouvrage de consigne et/ou une vitesse d'ouvrage de consigne réelle peut/peuvent être transmise(s) à un véhicule distributeur (3).

5. Train d'ouvrage selon l'une quelconque des revendications précédentes, **caractérisé en ce qu'**une vitesse réelle, en particulier du flux de matière, et/ou en particulier une quantité de remplissage d'un réservoir relais de matériau, peut/peuvent être transmise(s) du véhicule distributeur (3) vers le finisseur (2, 4).

6. Train d'ouvrage selon l'une quelconque des revendications précédentes, **caractérisé en ce que** le véhicule distributeur (3) présente au moins deux réservoirs relais de matériau avec différents mélanges.

7. Train d'ouvrage selon l'une quelconque des revendications précédentes, **caractérisé en ce que** le véhicule distributeur (3) présente un dispositif indicateur de niveau de remplissage (9).

8. Train d'ouvrage selon l'une quelconque des revendications précédentes, **caractérisé en ce que** des capteurs tels que des capteurs à ultrasons, des caméras ou des capteurs 3D sont agencés en vue d'une mesure de niveau de remplissage.

9. Train d'ouvrage selon l'une quelconque des revendications précédentes, **caractérisé en ce que** le véhicule distributeur (3) présente un dispositif d'indication de temps (10) permettant d'indiquer le temps restant avant l'épuisement de la quantité de remplissage présente dans le réservoir relais de matériau.

10. Train d'ouvrage selon l'une quelconque des revendications précédentes, **caractérisé en ce que** le véhicule distributeur (3) est en particulier associé à deux finisseurs (2, 4) et un stock courant de matériau de chaque finisseur peut être transmis par l'intermédiaire de la liaison de communication sans fil (6) à un opérateur du train d'ouvrage (1).

11. Train d'ouvrage selon l'une quelconque des revendications précédentes, **caractérisé en ce qu'**au moins le niveau de remplissage et/ou le temps prévisible restant avant épuisement de la quantité de remplissage du réservoir relais de matériau peut/peuvent être transmis à l'opérateur par le finisseur (2, 4) respectif.

12. Train d'ouvrage selon l'une quelconque des revendications précédentes, **caractérisé en ce qu'**un niveau de remplissage au niveau du finisseur (2, 4) peut être mesuré au moyen d'un capteur, par exemple un capteur à ultrasons, une caméra ou un capteur 3D.

13. Train d'ouvrage selon l'une quelconque des revendications précédentes, **caractérisé en ce que** la liaison de communication sans fil (6) est réalisée sous forme de WLAN, Bluetooth, ZigBee, Wibree, Wimax ou faisceau hertzien optique.

14. Train d'ouvrage selon l'une quelconque des revendications précédentes, **caractérisé en ce que** des données peuvent être transmises de manière cryptée au moyen de la liaison de communication sans fil (6).
